# FASCICULE DE BREVET EUROPEEN

(11) **EP 1 491 752 B1**
(45) Date de publication et mention de la délivrance du brevet: **17.01.2007**
(21) Numéro de dépôt: 04291572.8
(22) Date de dépôt: 22.06.2004
(51) Int. Cl.: F02K 3/10

(54) **Canaux de ventilation sur tôle de confluence d'une chambre de post-combustion**
Belüftungskanäle im Konfluenz-Blech einer Nachverbrennungskammer
Ventilation channels in the confluence plate of an afterburning chamber

(30) Priorité: 25.06.2003 FR 0307657
(43) Date de publication de la demande: 29.12.2004
(73) Titulaire: SNECMA, 75015 Paris (FR)
(72) Inventeur: Cortes, Thierry, 91800 Brunoy (FR); Page, Alain, 91230 Montgeron (FR); Baboeuf, Sébastien, 77210 Avon (FR); Roche, Jacques, 91090 Lisses (FR)
(74) Mandataire: Barbin le Bourhis, Joël

(56) Documents cités:
- US-A- 3 595 024
- US-A- 3 633 361
- US-A- 3 747 345
- US-A- 3 826 088
- US-A- 4 899 539
- US-A- 5 400 589
- US-A- 5 694 767

## Description

L'invention concerne les turbomachines d'aviation, notamment à usage militaire, comportant des chambres de post-combustion présentant un diffuseur en amont, comme décrites par exemple dans US 5400589.

Elle concerne plus précisément une turbomachine d'aviation à double flux ayant une chambre de post-combustion et comportant en amont de ladite chambre de post-combustion un diffuseur délimité par une tôle de confluence disposée à l'intérieur d'un carter, ledit carter et ladite tôle de confluence délimitant entre eux un canal annulaire pour la circulation d'un flux secondaire froid, des injecteurs amont de carburant étant disposés à l'entrée dudit diffuseur et des accroche-flammes étant disposés en aval desdits injecteurs, la tôle de confluence présentant, entre le plan radial contenant lesdits injecteurs et le plan radial contenant les accroche-flammes, une double courbure et s'évasant vers l'aval afin de ralentir l'écoulement du flux primaire en aval desdits injecteurs.

Ce type de turbomachine, comportant un diffuseur court entre les injecteurs et les accroche-flammes, se caractérise par un taux de dilution faible, vu de l'arrière-corps. Le flux secondaire sert notamment au refroidissement des pièces situées en aval des injecteurs et doit être judicieusement utilisé dans ce but.

A l'inverse, le flux primaire issu de la turbine basse-pression a un débit élevé. C'est sur lui que va reposer l'essentiel des performances du moteur. Il doit, par conséquent, avoir le minimum de pertes de charge et être le plus homogène possible en température et vitesse. Pour cela, le diffuseur de la chambre de post-combustion, constitué par la tôle de confluence, a pour fonction de ralentir le flux primaire en amont des accroche-flammes et le canaliser afin qu'il occupe, en aval, tout le volume de la chambre de post-combustion. Cette fonction, appelée fonction de diffusion car elle est accompagnée d'une augmentation de la pression statique, doit s'opérer sans que des tourbillons intempestifs se forment le long de la veine, ces tourbillons ou recirculations étant générateurs de pertes risquant d'occasionner une auto-inflammation du carburant issu des injecteurs amont.

Dans les chambres de post-combustion à fort taux de dilution, le flux primaire et une partie du flux secondaire se rejoignent pour se mélanger. A l'inverse, lorsque le taux de dilution est faible, la fraction du flux secondaire disponible pour le mélange à l'aval de la tôle de confluence est réduite lorsque tous les débits nécessaires à la ventilation ont été prélevés. La tôle de confluence doit donc s'évaser pour que le flux primaire occupe toute la hauteur de la chambre de post-combustion. Si la tôle a une forme mal adaptée, une recirculation se forme au voisinage de la tôle de confluence entre le plan des injecteurs et le plan des accroche-flammes. Cette recirculation est d'autant plus favorisée lorsque la giration en sortie de turbine basse pression est importante.

Un risque de recirculation apparaît ainsi au voisinage d'une tôle de confluence fortement diffusive et pour une forte giration du flux primaire. Cette recirculation est prédite par simulation numérique 3D de l'écoulement. Elle apparaît dans le flux primaire au niveau de la courbure concave de la confluence, celle-ci ménage alors une alcôve propice pour une poche de recirculation.

Il y a, en outre, une température et des gradients thermiques excessifs à la jonction de la portion à courbure convexe et de la portion à courbure concave de la tôle de confluence. Les forts gradients thermiques sont dus à la convection par le flux froid secondaire qui souffle sur la surface externe de la tôle et le flux chaud primaire qui souffle sur la surface interne.

Pour supprimer les tourbillons, on pourrait évidemment modifier la forme de la tôle de confluence en allongeant axialement le diffuseur, mais cette solution augmente l'encombrement du moteur.

Le but de l'invention est de diminuer les risques de recirculation et les gradients de température sans modifier la forme et la longueur du diffuseur.

Le but est atteint selon l'invention par le fait qu'une écope annulaire est prévue autour de la portion amont de ladite tôle de confluence pour prélever un débit d'air dans le flux froid, ce débit d'air étant injecté tangentiellement dans le flux primaire par une pluralité de canaux ménagés dans la paroi de la tôle de confluence entre l'écope et ledit diffuseur.

Ces canaux permettent, d'une part, de refroidir la tôle de confluence par convection, et, d'autre part, de créer un film d'air de refroidissement le long de la tôle de confluence soumise au rayonnement de la flamme de la chambre de post-combustion. Ceci diminue la température de la structure, ce qui conduit, de plus, à une réduction de la signature infrarouge des parties solides du fond de chambre. La circulation axiale de l'air de refroidissement le long de la paroi de la tôle de confluence permet en outre de chasser la perturbation dans cette zone.

De préférence, les canaux débouchant circonférentiellement dans le sillage des injecteurs ont une section nettement supérieure à celle des autres canaux.

Le débit d'air plus important issu de ces canaux plus larges permet de souffler la recirculation.

Avantageusement l'écope est délimitée intérieurement par une virole entourant la section amont du diffuseur et extérieurement par la partie amont d'une tôle qui forme en aval de la virole la zone médiane et la zone aval de la tôle de confluence refroidies par le débit d'air injecté par les canaux.

D'autres avantages et caractéristiques de l'invention ressortiront à la lecture de la description suivante faite à titre d'exemple et en référence aux dessins annexés dans lesquels :
la figure 1 est une demi-coupe, selon un plan contenant l'axe de symétrie, de la partie amont de l'arrière corps d'une turbomachine d'aviation selon l'invention, équipée d'un diffuseur en amont d'une chambre de post-combustion ;
la figure 2 est une vue en perspective de la virole intérieure délimitant la section amont du diffuseur.

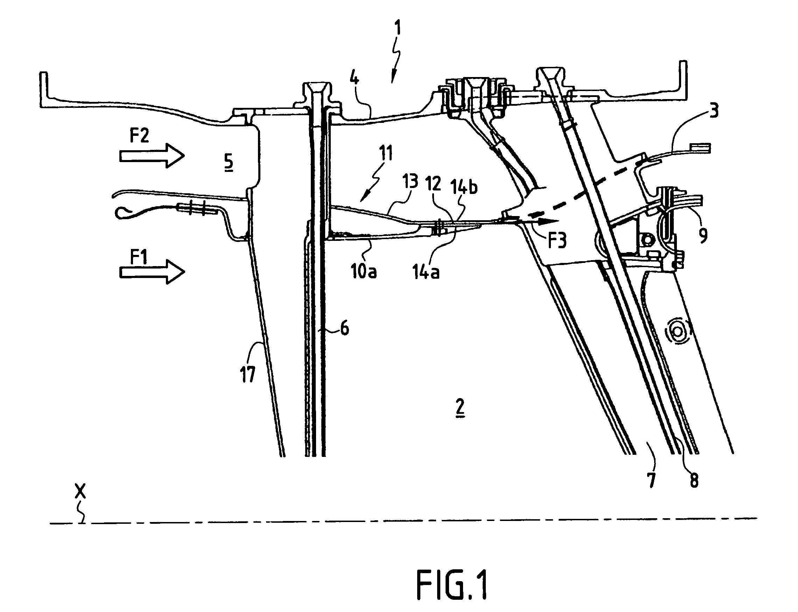

Sur la figure 1 on a représenté par la référence 1 la partie amont de l'arrière corps d'une turbomachine d'aviation d'axe X, présentant un diffuseur 2, en aval de la turbine basse pression et en amont d' une chambre de post-combustion.

Le diffuseur 2 est délimité par une tôle de confluence 3 située radialement à l'intérieur d'un carter 4, le carter 4 et la tôle de confluence 3 délimitant entre eux un canal annulaire 5 dans lequel circule un flux secondaire froid F2.

A l'extrémité amont du diffuseur 2 sont montés des injecteurs de carburant 6 radiaux, dits injecteurs amont, qui délivrent, en mode de fonctionnement de la post-combustion, un débit de carburant dans le flux primaire chaud F1 pénétrant dans le diffuseur 2. Dans un plan perpendiculaire à l'axe X et situés en amont des injecteurs amont 6, sont disposés des accroche-flammes radiaux 7 alternant circonférentiellement avec les injecteurs amont 6 dans des plans méridiens. Ces accroche-flammes 7 sont également équipés d'injecteurs de carburant 8, dits injecteurs aval. La référence 9 désigne un accroche-flammes annulaire de révolution autour de l'axe X disposé à l'extrémité des accroche-flammes radiaux 7.

Ainsi que cela se voit clairement sur la figure 1, la tôle de confluence 3 s'évase fortement vers l'aval entre la région des injecteurs amont 6 et la partie arrière des accroche-flammes 7, afin que la vitesse des gaz du flux primaire F1 soit diminuée au niveau des accroche-flammes 7. La tôle de confluence 3 présente une double courbure, vue de l'intérieur du diffuseur 2, dans la direction de l'axe X, à savoir une courbure convexe dans la région amont et une courbure concave dans la région aval.

Le but de l'invention est d'une part, d'assurer un refroidissement énergique de la tôle de confluence 3 dans sa zone médiane et sa zone aval qui sont soumises aux fortes températures régnant dans le diffuseur 2 en fonctionnement et le long desquelles peuvent se créer des recirculations génératrices de flux de chaleurs intenses.

Selon l'invention, ces zones médiane et aval sont refroidies par un débit d'air F3 prélevé dans le flux secondaire F2 au moyen d'une écope 11 entourant le prolongement interne amont 10a de la tôle de confluence 3 au droit et en aval des injecteurs amont 6 et injecté, tangentiellement à la face interne de ladite tôle 3, dans le flux primaire F1 par l'intermédiaire de canaux 12 ménagés dans la paroi de la tôle de confluence entre l'intérieur de l'écope 11 et le diffuseur 2.

Avantageusement l'écope 11 est délimitée intérieurement par une virole 10a entourant la section amont du diffuseur 2, et extérieurement par la partie amont 13 d'une tôle qui forme en aval de la virole 10a la zone médiane et la zone aval de la tôle de confluence 3, refroidies par le débit d'air F3 injecté par les canaux 12. Cette partie amont 13 comporte des orifices, traversés avec jeu par des tubes de ventilation 17 protégeant les injecteurs amont 6, afin de permettre l'introduction d'une partie du flux secondaire froid F2 dans l'écope 11 . La virole 10a et la partie amont 13 présentent, en aval, des zones de jonction axiales 14a et 14b à l'interface desquelles sont ménagés les canaux 12.

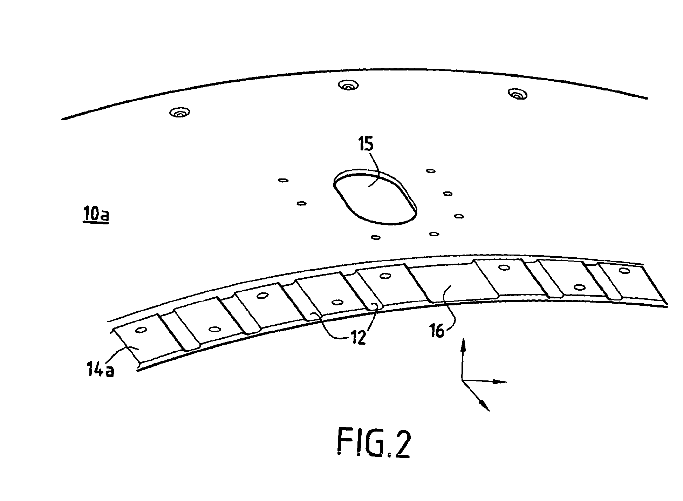

La figure 2 montre la virole 10a. Les canaux 12 sont ménagés sur la face externe de la partie aval 14a de cette virole. La référence 15 désigne un orifice traversé par un tube de ventilation 17 d'un injecteur amont 6. On voit sur cette figure que les canaux 12 sont formés par des gorges axiales et sont répartis en deux groupes.

Dans le sillage des injecteurs amont 6 sont prévus des gorges 16 de grande largeur qui permettent d'amener un débit d'air de ventilation important dans le diffuseur 2 afin de souffler une éventuelle recirculation qui pourrait s'initier en aval des injecteurs amont 6.

En dehors des sillages des injecteurs amont, les canaux 12 servent essentiellement au refroidissement par convection des parois de la tôle de confluence 3 dans cette zone et à la formation d'un film de refroidissement sur la paroi interne de ladite tôle 3 en aval de cette zone. Aussi sont-ils de faible section.

Ces canaux 12 et ces gorges 16 sont réalisés par usinage de la zone de jonction 14a de la virole 10a avant sa fixation sur la zone de jonction 14b de la tôle de confluence 3.

Les canaux 12 permettent un refroidissement énergique de la paroi de la tôle de confluence 3 et de la virole 10a dans les zones soumises à de hautes températures.

## Revendications

1. Turbomachine d'aviation comportant en amont d'une chambre de post-combustion un diffuseur (2) délimité par une paroi tubulaire (3) dite tôle de confluence disposée à l'intérieur d'un carter (4), ledit carter et ladite paroi délimitant entre eux un canal annulaire (5) pour la circulation d'un flux secondaire froid, des injecteurs amont (6) de carburant étant disposés à l'entrée dudit diffuseur (2) et des accroche-flammes (7) étant disposés en aval desdits injecteurs amont (6), ladite paroi (3) présentant une double courbure entre un plan radial contenant lesdits injecteurs amont (6) et un plan radial situé à l'arrière desdits accroche-flammes (7) et s'évasant vers l'aval afin de ralentir l'écoulement du flux primaire (F1) en aval desdits injecteurs amont (6), **caractérisée en ce qu**'une écope annulaire (11) est définie autour d'une portion amont de la paroi dudit diffuseur pour prélever de l'air frais dans ledit canal annulaire (5) et en ce que des canaux (12) repartis circonférentiellement sont définis dans la paroi (3) de ladite tôle de confluence entre une extrémité aval de l'écope et ledit diffuseur à l'intérieur duquel ils débouchent, lesdits canaux s'étendant et débouchant tangentiellement à la face interne de la paroi dudit diffuseur, dans une partie de celui-ci s'étendant entre les injecteurs amont et les accroche-flammes.

2. Turbomachine selon la revendication 1 **caractérisée par le fait que** les canaux (16) débouchant circonférentiellement dans le sillage des injecteurs ont une section nettement supérieure à celle des autres canaux (12).

3. Turbomachine selon la revendication 2 **caractérisée par le fait que** l'écope (11) est délimitée intérieurement par une virole (10a) entourant la section amont du diffuseur (2), et extérieurement par la partie amont (13) d'une tôle qui forme en aval de la virole (10a) la zone médiane et la zone aval de la paroi du diffuseur (3) refroidies par le débit d'air (F3) injecté par les canaux (12, 16)

4. Turbomachine selon la revendication 3 **caractérisée en ce que** la virole (10a) et la partie amont (13) présentent, en aval, des zones de jonction (14a, 14b), et **en ce que** les canaux (12, 16) sont ménagés à l'interface desdites zones de jonction (14a, 14b).

5. Turbomachine selon la revendication 4 **caractérisée par le fait que** les canaux (12, 16) sont ménagés sur la face externe de la virole (10a)..

## Claims

1. An aviation turbomachine including, upstream from an afterburner chamber: a diffuser (2) defined by a tubular wall (3) referred to as a confluence sheet disposed inside a casing (4), said casing and said wall defining between them an annular channel (5) for conveying a cold secondary flow, upstream fuel injectors (6) being disposed at the inlet to said diffuser (2) and flame-catchers (7) being disposed downstream from said upstream injectors (6), said wall (3) presenting, between the radial plane containing said upstream injectors (6) and the radial plane situated at the rear ends of said flame-catchers (7), two bends so as to flare downstream in order to slow down the primary flow (F1) downstream from said upstream injectors (6), **characterised in that** an annular scoop (11) is provided around the upstream portion of the wall of said diffuser in order to extract fresh air from said annular channel (5) and **in that** channels (12) distributed circumferentially are provided in the wall (3) of said confluence sheet between a downstream end of the scoop and said diffuser inside which they open out, said channels extending and opening out tangentially to the inside face of the wall of said diffuser, in a part thereof which lies between the upstream injectors and the flame-catchers.

2. A turbomachine according to claim 1, **characterised by** the fact that the channels (16) opening out circumferentially into the wakes from the injectors are of section that is considerably greater than the section of the other channels (12).

3. A turbomachine according to claim 2, **characterised by** the fact that the scoop (11) is defined on the inside by a shell (10a) surrounding the upstream section of the diffuser (2), and on the outside by the upstream portion (13) of a sheet which, downstream from the shell (10a) forms the middle zone and the downstream zone of the wall of the diffuser (3), which zones are cooled by the flow of air (F3) injected via the channels (12, 16).

4. A turbomachine according to claim 3, **characterised in that** the shell (10a) and the upstream portion (13) present downstream junction zones (14a, 14b), and **in that** the channels (12, 16) are formed at the interface of said junction zones (14a, 14b).

5. A turbomachine according to claim 4, **characterised by** the fact that the channels (12, 16) are formed in the outside face of the shell (10a).

## Patentansprüche

1. Flugzeug-Turbotriebwerk, das vor einer Nachverbrennungskammer einen Diffusor (2) aufweist, der von einer röhrenförmigen Wand (3) umgrenzt wird, einem sogenannten Konfluenzblech, das im Inneren eines Gehäuses (4) angeordnet ist, wobei dieses Gehäuse und diese Wand zwischen sich einen ringförmigen Kanal (5) für die Zirkulation eines Mantelstroms bilden, wobei vordere Brennstoff-Einspritzdüsen (6) am Eintritt dieses Diffusors (2) angeordnet sind und Flammenfänger (7) hinter diesen vorderen Einspritzdüsen (6) angeordnet sind, wobei diese Wand (3) eine Doppelkrümmung zwischen einer radialen Ebene, die diese vorderen Einspritzdüsen (6) enthält, und einer radialen Ebene, die sich hinter diesen Flammenfängern (7) befindet, aufweist, die sich nach hinten erweitert, um die Strömung des Primärstroms (F1) hinter diesen vorderen Einspritzdüsen (6) zu verlangsamen,
**dadurch gekennzeichnet,**
**dass** um einen vorderen Abschnitt der Wand des genannten Diffusors herum ein ringförmiger Ansaugschacht (11) gebildet ist, um Frischluft aus diesem ringförmigen Kanal (5) zu entnehmen, und dass in der Wand (3) dieses Konfluenzblechs Kanäle (12) auf der Umfangslinie zwischen einem hinteren Ende des Ansaugschachts und dem Diffusor verteilt angeordnet sind, in dessen Inneres sie münden, wobei diese Kanäle sich tangential zur Innenseite der Wand dieses Diffusors erstrecken und münden, und zwar in einem Teil von diesem, der sich zwischen den vorderen Einspritzdüsen und den Flammenfängern erstreckt.

2. Turbotriebwerk nach Anspruch 1,
**dadurch gekennzeichnet,**
**dass** die Kanäle (16), die auf der Umfangslinie in den Wirbel der Einspritzdüsen münden, einen deutlich größeren Querschnitt haben als die anderen Kanäle (12).

3. Turbotriebwerk nach Anspruch 2,
**dadurch gekennzeichnet,**
**dass** der Ansaugschacht (11) innen durch einen Ring (10a) begrenzt ist, der den vorderen Abschnitt des Diffusors (2) umgibt, und außen durch den vorderen Teil (13) eines Blechs begrenzt ist, das hinter dem Ring (10a) den Mittelbereich und den hinteren Bereich der Wand (3) bildet, die von der durch die Kanäle (12, 16) eingespritzten Luft gekühlt werden.

4. Turbotriebwerk nach Anspruch 3,
**dadurch gekennzeichnet,**
**dass** der Ring (10a) und der vordere Teil (13) hinten Verbindungsbereiche (14a, 14b) bilden, und dass die Kanäle (12, 16) an der Grenzfläche dieser Verbindungsbereiche (14a, 14b) ausgeführt sind.

5. Turbotriebwerk nach Anspruch 4,
**dadurch gekennzeichnet,**
**dass** die Kanäle (12, 16) an der Außenseite des Rings (10a) ausgeführt sind.
